# EUROPEAN PATENT SPECIFICATION

(11) **EP 2 934 371 B1**
(45) Date of publication and mention of the grant of the patent: **10.07.2019**
(21) Application number: 13824398.5
(22) Date of filing: 17.12.2013
(51) Int. Cl.: A61C 13/30, A61C 5/35

(54) **ENDODONTIC SUPPORTING PIN AND RELATED CONNECTOR**
ENDODONTISCHER STÜTZSTIFT UND DAZUGEHÖRIGER VERBINDER
PIVOT SUPPORT ENDODONTIQUE ET CONNECTEUR ASSOCIÉ

(30) Priority: 18.12.2012 IT BS20120181
(43) Date of publication of application: 28.10.2015
(73) Proprietor: Tonini, Riccardo, 25123 Brescia (IT)
(72) Inventor: Tonini, Riccardo, 25123 Brescia (IT)
(74) Representative: Sangiacomo, Ines
(86) International application number: PCT/IB2013/061014
(87) International publication number: WO 2014/097131

(56) References cited:
- WO-A1-2008/123700
- WO-A1-2009/102958
- CH-A5- 652 588
- DE-B- 1 191 073
- DE-C- 828 283
- FR-A- 1 322 961
- FR-A1- 2 385 383
- US-A- 5 161 973
- US-A1- 2004 265 783
- US-A1- 2010 124 728

## Description

### Scope of the Invention

The present invention relates to the dental field and in particular relates to an endodontic supporting pin for a tooth reconstruction and to a corresponding connector.

### State of the art

As it is known, in endodontic field operations of root canal treatment are usually carried out.

The operation of root canal treatment provides the removal of the tooth pulp and in particular it consists in drilling, by appropriate milling tools, a root canal of the tooth itself by completely removing its content of vessels and nerves.

Such an operation is followed by a subsequent step of sealing the so-treated root canal, carried out by proper sealing materials, for example cements and/or thermoplastic materials used as canal filler.

The sealing step, in some cases, is followed by a partial tooth reconstruction step comprising a step of installation of a supporting pin. In fact, based on the volume of material removed by milling, a large part of the tooth needs to be reconstructed for recovering its original functionalities as well as its aesthetical appearance. Thus the supporting pin acts as a support for an auxiliary tooth portion, for example a prosthetic crown, and also represents a support for promoting the correct reconstruction of the tooth itself.

In particular, the installation step results in a partial removal of the sealing material of the root canal or, alternatively if not present, a partial filling thereof, so that to define a housing seat in which the supporting pin is inserted. In other words, in the root canal a bottom seal made of sealing material is held or created, for substantially realizing a partial housing seat for the supporting pin.

More particularly, said installation step provides that a portion of the supporting pin is inserted and fastened into the housing seat of the root canal by employing a fastening material, usually a resin, different from the sealing material, and/or in combination with further mechanical fastening means, for example a thread obtained on a portion of the pin.

The remaining portion of the supporting pin is conversely held as protruding from the root canal such that the prosthetic crown can be applied. The supporting pin is thus adapted to assure the filling solidity and the structural resistance of the prosthetic crown as well as that of the tooth portion subjected to coronal reconstruction.

Different typologies are known of endodontic supporting pins used for the tooth reconstruction.

An example of supporting pin for endodontic applications is described in the document US 6,371,763 disclosing a supporting pin composed of a plurality of glass fiber micro-filaments homogeneously clustered together in a linear or twisted way. The number of micro-filaments defines the external diameter of the supporting pin. The so-realized pin is substantially flexible so that it can be inserted in the drilled root canal thereby fitting to its usually curved configuration.

Endodontic supporting pins having rigid structure are known as well.

In US 2003/0113691 a substantially cylindrical supporting pin is described, provided with a housing for the connection of a removing tool. In particular, the housing is substantially coaxial to the pin axis, with circular or polygonal section, and is adapted to be engaged by a removing tip having a shape complementary thereto, integral with the removing tool. The housing has a diameter, or however a width, much smaller than the external diameter of the supporting pin in order to not impair its mechanical resistance.

When the pin is in place, the housing is generally filled with easily removable material, in particular to allow the engagement thereof with the tip of the tool for the pin removal.

It is also known the use of pins of tubular shape to allow the installation thereof on already existing pins, or to leave free access to the tooth canal. Usually, those are pins made of metal to assure an adequate sturdiness in their use.

In particular, patent US 5,161,973 relates to a method for installing a pin in a tooth already having a metal obturator inside thereof. The method comprises the steps of obtaining a hole in the tooth with a tubular cutter having an internal diameter larger than the obturator diameter and inserting a tubular pin into the hole, the pin receiving the metal obturator in its own inside. The pin is thus tubular in order to be installed in a tooth wherein a metal obturator has already been installed, which is englobed outside thereof without being removed.

Document CH 652588 relates to a tubular pin for allowing the access to the tooth root canal in which it is installed. In this way, treatments to the canal can be performed without the need of pin removal.

German Patent DE 828283 relates to a structured pin for driving a drill in case damaged portions of a tooth root canal have to be removed, without impairing the healthy portions of the root itself. For this purpose the pin has to be a metal one.

German Patent DE 1191073 describes a tooth pin having an opening for the insertion of a metal wire adapted to be inserted into the tooth canal to prevent the cement from entering during the fastening step of the pin. The metal wire is then removed such that the opening remains free to allow accessing to the canal for possible medications.

French Patent FR 1.322.961 relates to a pin for tooth prostheses comprising a threaded rod intended to be screwed in a corresponding tapping of a sleeve inserted and cemented in a canal made in a tooth root.

Finally, International Patent Application WO 2009/102958 relates to a tooth pin system having a thermoplastic coating and which is heated and inserted in a canal of a tooth root for the pin fastening.

These supporting pins and others known in the art give rise to some problems during the installation step in the root canal, and in particular generate drawbacks of structural resistance in the connection supporting pin - root canal.

In detail, in the usual practice, the installation and the fastening of the supporting pin inside the root canal during the reconstruction step, occur as follows.

Firstly, by means of a needle or cannula a resin amount is inserted into the root canal, adapted to fill it at least partially.

Secondly, the supporting pin is positioned into the resin by submerging it until a desired depth. During the pin submersion into the resin a passage opens on the open surface of the latter upon which air bubbles can remain trapped into the resin until even its solidification.

Therefore the presence of air bubbles into the resin determines structural drawbacks in the supporting pin - root canal assembly, that is to say it yields a depletion of mechanical resistance which can cause a poor pin stability with possible rupture of the reconstructed tooth portion.

Italian Patent IT 1372930 provides the use of a steel metal needle for injecting the resin into the endodontic hollow. The needle is then tailored cut, directly inside the patient mouth, and left inside the hollow. This supplementary operation could impair the correct positioning of the needle itself and makes difficult the pin dimensioning. The patent suggests the use of a needle for injecting the resin starting from the bottom of the endodontic hollow, to avoid the inclusion of air bubbles. However these needles are stiffer than dentin and can damage the tooth canal walls. However other material types, which can be employed alternatively to metal, are not indicated in the patent nor indication is given about the size of the internal diameter of the needle. From the patent drawing it can then be observed that the needle end portion is partially cut, to facilitate the insertion thereof into the canal and promote the resin outflow. However this makes the ending part weaker than the remaining part of the needle, with subsequent problems relating to the needle resistance.

Document US 2004/0265783 discloses an endodontic post comprising a post section, in which the post section comprises a rigid endodontic section and a tip section; wherein the tip section is a flexible carrier surrounded by a filler cone; and wherein the tip section comprises one or more protrusions extending outwardly from the tip section for engaging the filler cone; US 2004/0265783 also discloses a device for filling a root canal comprising: a carrier; and a filler cone; wherein the filler cone is disposed on the carrier; wherein the carrier comprises a rigid handle section and a tip section; wherein the tip section is a flexible section surrounded by the filler cone; and wherein the tip section comprises one or more protrusions extending outwardly from the tip section for engaging the filler cone.

### Summary of the invention

It is therefore object of the present invention to provide an endodontic supporting pin and a corresponding connector which allow overcoming the above mentioned drawbacks referring to the known art.

It is also an object of the present invention to provide an endodontic supporting pin having, in use, a mechanical resistance comparable to the original bone resistance of the tooth in which it is inserted.

It is further an object of the present invention to provide an endodontic supporting pin which, in use, is particularly resistant from a structural point of view regardless of its dimensions.

It is again an object of the present invention to provide an endodontic supporting pin able to fit to different use requirements.

It is also an object of the present invention to provide an endodontic supporting pin which is easy and cheap to realize.

It is further an object of the present invention to provide an endodontic supporting pin having already the correct measure and which does not require additional cut operations once installed into the tooth.

It is a further an object of the present invention to provide a kit comprising an endodontic supporting pin and a related connector which simply and effectively solve the drawbacks of conventional solutions.

These and other objects are obtained by a dental kit comprising an endodontic supporting pin and a connector, according to claim 1.

In particular the endodontic supporting pin comprises an elongated body having a longitudinal axis and a prearranged external width or external diameter (**dₑₓₜ**), a through hole extended into the elongated body with a drilling axis substantially parallel to said longitudinal axis and with a prearranged internal width or internal diameter (**dᵢₙₜ**), wherein the ratio between the internal width/internal diameter (**dᵢₙₜ**) of the through hole and the external width/external diameter (**dₑₓₜ**) of the elongated body determined on a common measurement plane perpendicular to the longitudinal axis and to the drilling axis cross-cutting the supporting pin, is comprised between 0.5 and 0.65, so that the supporting pin is adapted to act as a cannula for injecting a fastening material into a root canal of a tooth and that the through hole is adapted to be filled with the fastening material, thereby constituting a core of the supporting pin.

The term "external/internal width" is substantially referred to polygonal sections of the elongated body and/or the through hole of the supporting pin according to the invention and by this definition the maximum width of the considered polygonal section is substantially intended.

Conversely, the term "external/internal diameter" is referred to substantially circular sections of the elongated body and/or the through hole.

The supporting pin is intended to couple with the connector.

Specifically, the connector has a hollow body which defines a passage duct of a fastening material, provided with a connecting portion to be combined with a device for injecting a fastening material and a tip portion to be coupled with a free end of the supporting pin. With the term "free end" the end of the supporting pin is meant, which is intended to appear, once installed, from the root canal.

The connector tip portion has a complementary shape with respect to the shape of the free end of the supporting pin for realizing a substantially sealed shape coupling.

More in detail, the tip portion has shape and size suitable to be fitted on the outside or to be inserted inside the free end of the supporting pin; the connecting portion of the connector has suitable shape and size to be combined with a device for injecting a fastening material, or else it can be integral with the injecting device itself.

The above described technical characteristics of the endodontic supporting pin are advantageous with respect to the known art for the following reasons.

The supporting pin besides playing the main function of support for the prosthetic reconstruction of the tooth, also acts as a cannula for the injection of a fastening material into the tooth root canal and allows to realize a homogeneous distribution of the fastening material by avoiding the drawback due to the formation of air bubbles, as described in detail in the following. The presence of an outer connector allows easily putting into communication the supporting pin with an injecting device, without modifying the structure of the pin itself and can be easily removed at the end of the installation step.

In particular, the installation of the endodontic supporting pin occurs as follows.

A first step provides the realization of a housing seat for the supporting pin with sealing of a bottom portion of the root canal. In particular, the housing seat is obtained by a partial removal of sealing material from the root canal if already present, or alternatively by a partial filling of the root canal itself always with the sealing material.

In a second step, the supporting pin engages the housing seat contacting with a bottom surface thereof (seal), in particular it is in abutment with the housing seat, or it is inserted up to a certain depth therein, or again, alternatively the supporting pin engages the housing seat at a certain distance from the bottom surface.

Preferably, before positioning the supporting pin into the housing seat, the collector tip portion is coupled with the free end of the supporting pin. Furthermore, if required, the connecting portion of the adapter is combined with the device for injecting the fastening material.

Through the through-hole present in the elongated body of the supporting pin a fastening material is therefore introduced, preferably a self-hardening injectable resin, which arranges over the bottom surface of the housing seat, filling the housing seat i.e. the remaining part of the root canal with a distribution going from the bottom surface towards the top of the root canal itself. Such a distribution causes, at the same time, the fastening of the supporting pin into the canal, which is gradually surrounded by the going up resin, until being englobed into the same resin. Finally, at the end of the filling, the connector tip portion is disconnected from the free end of the supporting pin. In accordance with the invention, a resin insertion carried out through the through-hole of the supporting pin avoids the presence of air bubbles into the hardened resin. Of course no opening is generated on the open surface of the resin since the supporting pin is already positioned in the housing seat of the root canal when the resin is injected, thus allowing a homogeneous distribution thereof also free from defects such as air bubbles.

Advantageously, in accordance with the invention the afore said ratio (**dᵢₙₜ**/**dₑₓₜ**) allows facilitating the resin outflow within the through hole, without causing restrictions in its delivery and plugging and/or clogging in the through hole. Furthermore such a ratio (**dᵢₙₜ**/**dₑₓₜ**) allows obtaining an adequately robust supporting pin.

Still in accordance with the invention, during the resin insertion step, the through hole itself of the supporting pin is in its turn gradually filled with resin and, therefore, at the end of the installation step the supporting pin has a core made of resin. This prevents bacterial infiltrations from occurring in the tooth root canal which can cause infections to the roots and outside the tooth roots and contributes to increase the mechanical resistance of the supporting pin.

Preferably, the elongated body of the supporting pin has a cylindrical or frusto-conical shape having a circular/ polygonal base and the through hole has a substantially circular/ polygonal shape, or a combination thereof. Preferably, the connector tip portion is fitted outside the free end of the supporting pin and similarly the passage duct has respectively a cylindrical or frusto-conical shape having a circular/ polygonal base with a substantially circular/ polygonal section.

In a preferred embodiment the supporting pin having a frusto-conical shape has an outer side wall tilted with respect to the longitudinal axis, of an angle comprised between 2° and 15°. Consequently, the passage duct of the connector tip portion has in its turn a corresponding frusto-conical shape.

Advantageously, the elongated body is realized in a composite material preferably comprising carbon fiber and/or glass fiber, or else it is made of metal or plastic material. The selection of the material used for the elongated body and the fastening material, i.e the resin representing the core of the supporting pin in use, allows diversifying the mechanical and structural characteristics of the supporting pin in accordance with specific requirements, differently from the pins realized and used according to known art which do not provide for a core made of resin. Advantages follow such a higher resistance to cyclic loads the treated tooth is subjected to, mainly during chewing. In fact the resistance and in general the mechanical characteristics of the supporting pin can vary according to the typology of used resin, the density thereof and other parameters.

Preferably, the elongated body comprises at its end adapted to be introduced in the housing seat of the tooth root canal, at least one notch radial with respect to the drilling axis. In particular, the notch is obtained in the pin thickness and creates a passage intercepting the through hole. In this way at the notch, the resin coming from the through hole expands in radial direction too and promotes a more homogeneous distribution thereof. With the aid of the notch also a possible clogging effect is prevented when the end of the supporting pin contacts the bottom surface of the housing seat of the tooth root canal.

The afore said elongated body has one or more openings intercepting the through hole. Also the openings have the function of causing the resin outflow substantially in a direction radial with respect to the drilling axis at a higher height with respect to the notch made at the end of the supporting pin.

The openings can be shaped as one or more slots or as one or more holes aligned each other along the longitudinal axis.

The openings are preferably obtained on the elongated body of the supporting body from opposite sides with respect to a symmetry plane containing said longitudinal axis.

### Detailed description of the figures

Further characteristics and advantages of the present invention will be more evident from a review of the following specification of some preferred, but not exclusive, embodiments, shown for illustration purposes only and without limitation, with the aid of the attached drawings, in which:
- figure 1 shows a perspective view of an endodontic supporting pin, which is not part of the claimed invention;
- figure 2 shows a cross sectional view of the endodontic supporting pin of figure 1 ;
- figure 3A shows a supporting pin coupled with a connector in an embodiment, which is not part of the claimed invention;

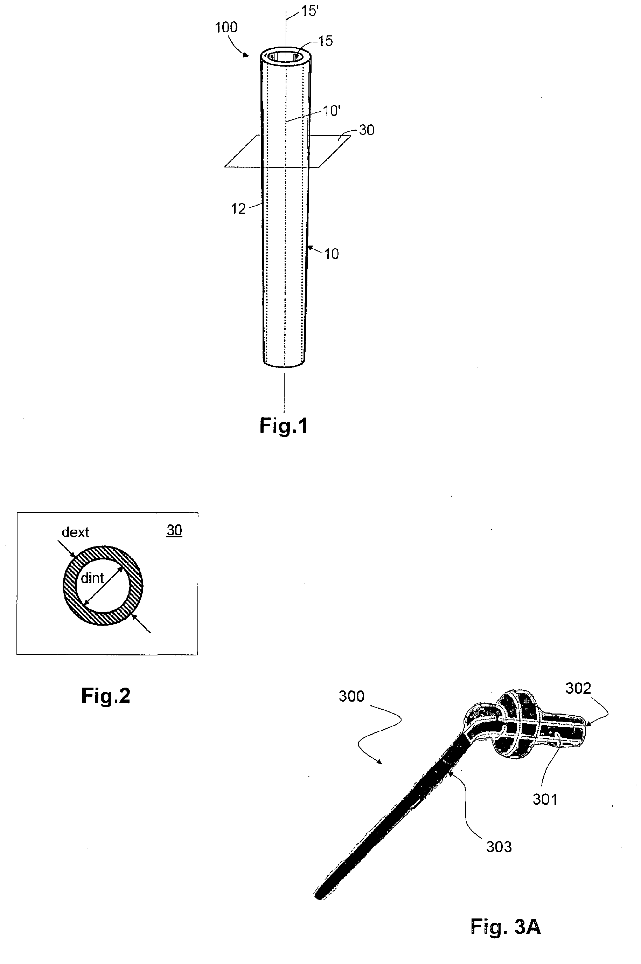

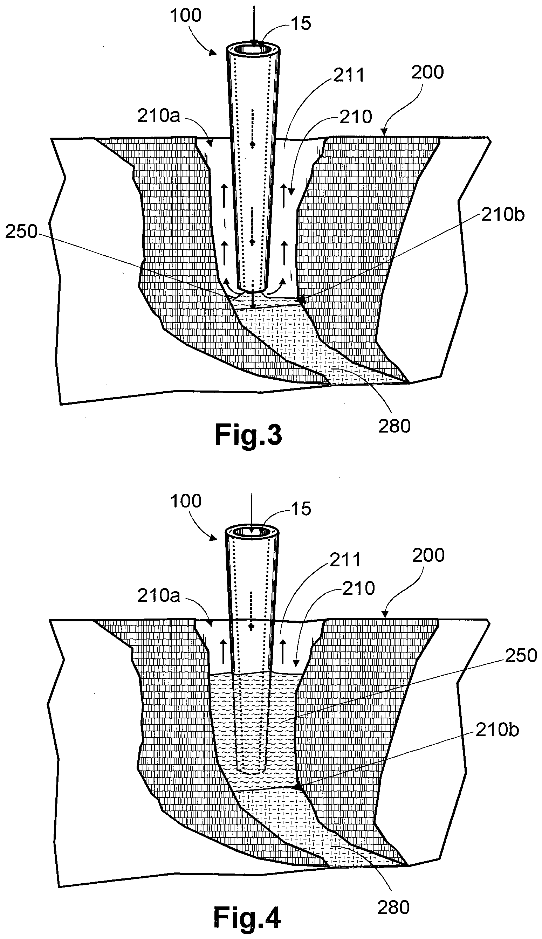

- figure 3 shows the endodontic supporting pin of figure 1 during a first installation step in a tooth root canal;
- figure 4 shows the endodontic supporting pin in a time step subsequent to the step shown in figure 3;

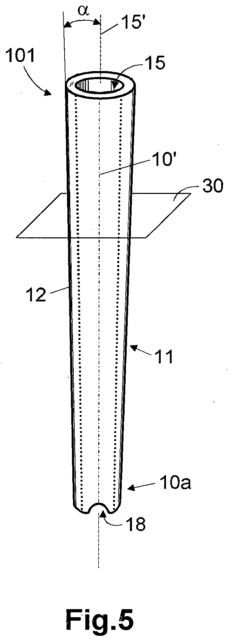

- figure 5 shows a constructive variation of the endodontic supporting pin of figure 1, which is not part of the claimed invention;

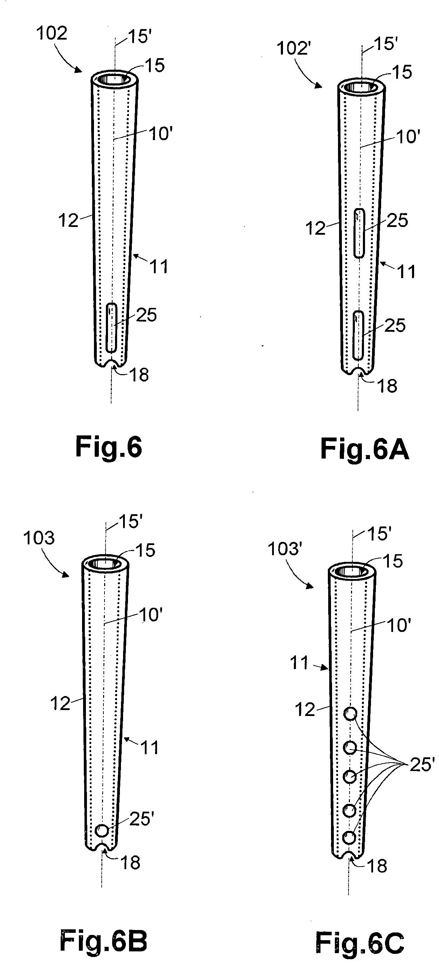

- figures 6 to 6C show additional constructive variations of the endodontic supporting pin according to the present invention.

### Detailed description of the invention

Referring to figure 1 an endodontic supporting pin **100** is represented, used for dental applications of prosthetic reconstruction of a tooth generally following operations of root canal treatment or alike.

In particular the supporting pin **100** comprises an elongated body **10** with a longitudinal axis **10'** and an external width or external diameter **dₑₓₜ** (Fig. 2). On the elongated body **10** a through hole **15** is obtained having internal width or internal diameter **dᵢₙₜ** (Fig. 2) with a drilling axis **15'** substantially parallel to the longitudinal axis **10'** and preferably coincident thereto.

As better highlighted in figure 2, the ratio between the internal width/internal diameter **dᵢₙₜ** of the through hole 15 and the external width/external diameter **dₑₓₜ** of the supporting pin **100** determined on a common measurement plane **30** (Fig. 1) perpendicular to the longitudinal axis **10'** and to the drilling axis **15'**, is comprised between 0.5 and 0.65.

In particular, as represented in the examples of figures 1 to 6C, the elongated body **10** and the through hole **15** have substantially a circular section and in such a case it is referred to the expression "internal diameter" of the through hole **15** and "external diameter" of the elongated body **10**, without however excluding the possibility of providing an elongated body and/or a through hole with different geometry, for example with polygonal section, for which it is referred to the expression "internal width" of the through hole and "external width" of the elongated body, such an embodiment not being shown in figures.

Dimensional examples of the supporting pin **100**, according to the present invention, provide for a through hole **15** with a **dᵢₙₜ** = 0.25 mm and an elongated body **10** with **dₑₓₜ** = 0.7 mm, both detected on the common measurement plane **30**. Or else a supporting pin with **dᵢₙₜ** = 0.5 mm and **dₑₓₜ** = 1 mm or again with **dᵢₙₜ** = 0.7 mm and **dₑₓₜ** = 1.5 mm.

An alternative embodiment of the supporting pin wherein parts structurally and functionally corresponding to the afore mentioned ones for the pin **100** hold the same reference numbers, is shown in the example of figure 5 wherein a supporting pin **101** is represented.

The supporting pin **101** has an elongated body **11** substantially similar to the pin of figure 1, but having a frusto-conical shape and comprising an outer side wall **12** tilted, with respect to the longitudinal axis 10', of an angle α comprised between 2° and 15°. Additionally the supporting pin **101** has, at one end **10a**, a notch **18** adapted to facilitate the outlet of the resin used for the pin fastening, according to a radial direction with respect to the drilling axis **15'**, as it will be better evident in the following.

Embodiments of the supporting pin according to the present invention are shown in the examples of figures 6, 6A, 6B and 6C. In particular in the afore said figures, wherein parts structurally and functionally corresponding to those of the afore described pins hold the same reference numbers, supporting pins **102**, **102'**, **103**, **103'** are shown, respectively. In detail, the afore said supporting pins comprise one or more openings **25**, **25'** obtained on the frusto-conical elongated body **11** which intercept the through hole **15**, at a height higher than the notch **18** obtained on the end **10a** and, specifically, comprise a single slot **25** (Fig. 6) or several slots **25** aligned each other along the longitudinal axis **10'** (Fig. 6A), or alternatively a single hole **25'** (Fig. 6B) or still several holes **25'** aligned each other along the longitudinal axis **10'** (Fig. 6C).

The elongated body **10**, **11** of the supporting pin **100**, **101**, **102**, **102'**, **103**, **103'** is preferably made of a composite material comprising carbon fiber and/or glass fiber or it can alternatively be made of metal or plastic material.

Figure 3A shows an example of connector **300** according to an embodiment of the present invention. The connector **300** has a hollow body that, in its inside, defines a passage duct **301** in which a fluid coming from a source - not represented - is intended to flow, the source can be an injecting device. The fluid is fed into the connector through a connecting portion **302** adapted to be coupled with the feeding source, and outflows through a tip portion 303. The tip portion is shaped and sized so that to result complementary to a free end **10b**, opposite to the end **10a**, of the supporting pin for realizing with the same a substantially sealed shape coupling.

More in detail, the tip portion has shape and size suitable to be inserted into the through hole **15** of the supporting pin at the free end **10b**, or preferably to be fitted outside thereof.

The connector **300** can be integral with the injecting device but, preferably, it is a standalone part in order to be changed according to needs based on the shape and size of the supporting pin to be used according to requirements or applications.

Referring to figures 3 and 4, a supporting pin **100** is shown according to the present invention as represented in the embodiment of figure 1, during a step of installation in a root canal **210** of a tooth **200**.

Firstly, a housing seat **211** is obtained in the root canal **210** of the tooth **200**, generally obtained by removing a part of the already present sealing material from the root canal **210** so that to hold a sealing **280** in the bottom portion of the root canal **210** itself. The sealing **280** defines a corresponding bottom surface **210b**. Alternatively, the housing seat **211** can be prearranged by inserting the sealing material into the root canal if this is not already present.

The supporting pin **100** is subsequently engaged in the housing seat **211**, preferably until reaching and abutting against the bottom surface **210b** of the sealing **280,** however without excluding, as shown in figures 3 and 4, a positioning thereof at a height higher than the bottom surface **210b** of the sealing **280**.

The adapter **300** is fastened to the supporting pin **100** preferably before positioning the pin itself into the housing seat **211**.

Therefore the supporting pin **100** allows injecting a fastening material through the through-hole **15**, in particular an injectable resin **250** (Fig. 3) and acting substantially as an injection cannula or needle. To do this the free end **10b**, opposite with respect to the end **10a**, of the supporting pin **100** is coupled to the connector **300**, which belongs to the device for injecting the resin **250**.

In this way, the resin **250** flows through the through hole **15** and gradually fills the root canal **210** of the tooth **200** and, at the same time, also the through hole **15** of the supporting pin **100**, with a distribution going from the bottom surface **210b** of the sealing **280**, towards a top **210a** of the root canal **210** itself thus preventing air bubbles from forming in the resin as conversely occurs by following the known installation steps. The supporting pin **100** remains thus trapped in the root canal **210** as a consequence of the hardening of the resin **250** itself. The connector **300** is then removed leaving the supporting pin installed in the tooth root canal.

The advantages of the present invention, already evident in the afore mentioned description, can be summarized by pointing out that the supporting pin, according to the invention, allows carrying out an installation in the root canal of a tooth by acting as a cannula or needle for the injection of a fastening material so that to obtain a homogeneous distribution of the fastening material itself therefore avoiding the drawback due to the formation of air bubbles.

## Claims

1. Dental kit comprising: an endodontic supporting pin (100) intended to act as a support for a prosthetic reconstruction of a tooth, and a connector (300) comprises a hollow body which defines a passage duct (301) of a fastening material, in which said endodontic supporting pin and said connector are apt to be removably coupled together and in which said endodontic supporting pin comprises
an elongated body (10) having a longitudinal axis (10') and an external width/external diameter (dₑₓₜ);
a through-hole (15) obtained in the elongated body (10), said through-hole (15) having a drilling axis (15') substantially parallel to said longitudinal axis (10') and an internal width/internal diameter (dᵢₙₜ),
**characterized in that** the ratio between the internal width/internal diameter (dᵢₙₜ) of said through-hole (15) and the external width/external diameter (dₑₓₜ) of said elongated body (10), determined with respect to a common measurement plane (30) perpendicular to both the longitudinal axis (10') and the drilling axis (15'), is comprised between 0.5 and 0.65 such that said endodontic supporting pin (100) is suitable to act as a cannula for injecting the fastening material in a root canal (210) of the tooth (200) and that the through-hole (15) is adapted to be filled with fastening material which, once hardened, constitutes the core of the supporting pin, and **in that**
said connector (300) comprises, on one side, a connecting portion (302) to be combined with an outer device for injecting the fastening material and, on the other side, a tip portion (303) adapted to be coupled with a free end (10b) of said endodontic supporting pin (100), and wherein said tip portion (303) has a complementary shape with respect to the shape of said free end (10b) of the endodontic supporting pin for realizing a substantially sealed shape coupling, and **in that**
said elongated body (10) is provided with one or more openings (25, 25') intercepting said through-hole (15).

2. Dental kit according to claim 1, wherein said drilling axis (15') is coincident with said longitudinal axis (10') of the elongated body (10).

3. Dental kit according to claims 1 or 2, wherein said elongated body (10) has a cylindrical or frusto-conical shape.

4. Dental kit according to claim 3, wherein said elongated body comprises an outer side wall (12) which is tilted at 2° - 15° with respect to said longitudinal axis (10').

5. Dental kit according to any one of claims 1-4, wherein said elongated body (10) is provided, at one end (10a) thereof, with at least one notch (18) intercepting said opened through-hole (15).

6. Dental kit according to claim 1, wherein said openings (25, 25') are obtained in said elongated body (10) on opposite sides with respect to a plane of symmetry containing said longitudinal axis (10').

7. Dental kit according to claim 1 or 6, wherein said openings are slots (25) and/ or holes (25') which are transversally or longitudinally aligned with each another on said elongated body.

8. Dental kit according to any one of the preceding claims, wherein the elongated body (10) is made of a composite material comprising carbon fiber and/or glass fiber.

9. Dental kit according to any one of the preceding claims, wherein said tip portion (303) is adapted to be fitted on, or inserted in, said free end (10b) of said endodontic supporting pin (100).

## Patentansprüche

1. Dentalkit umfassend: einen endodontischen Stützstift (100), der dazu bestimmt ist, als Träger für eine prothetische Rekonstruktion eines Zahns zu dienen, und einen Verbinder (300), der einen Hohlkörper umfasst, der einen Durchgangskanal (301) aus einem Befestigungsmaterial definiert, wobei der endodontische Stützstift und der Verbinder lösbar miteinander verbunden werden können und wobei der endodontische Stützstift
einen länglichen Körper (10) mit einer Längsachse (10') und einer/einem Außenweite/Außendurchmesser (dₑₓₜ),
ein in dem Langgestreckten Körper (10) erhaltenes Durchgangsloch (15), wobei das Durchgangsloch (15) eine im Wesentlichen parallel zu der Längsachse (10') verlaufende Bohrachse (15') und eine/einen Innenweite/Innendurchmesser (dᵢₙₜ) aufweist,
**dadurch gekennzeichnet, dass** das Verhältnis zwischen Innenweite/Innendurchmesser (dᵢₙₜ) des Durchgangslochs (15) und Außenweite/Außendurchmesser (dₑₓₜ) des länglichen Körpers (10), das in Bezug auf eine gemeinsame Messebene (30) senkrecht sowohl zur Längsachse (10') als auch zur Bohrachse (15') bestimmt wird, zwischen 0,5 und 0,65 liegt, so dass der endodontische Stützstift (100) als Kanüle zum Einspritzen des Befestigungsmaterials in einen Wurzelkanal (210) des Zahns (200) geeignet ist und dass das Durchgangsloch (15) mit Befestigungsmaterial befüllbar ist, das nach dem Aushärten den Kern des Stützstiftes bildet, und dass
der Verbinder (300) auf einer Seite einen Verbindungsabschnitt (302) aufweist, der mit einer äußeren Vorrichtung zum Einspritzen des Befestigungsmaterials kombinierbar ist und auf der anderen Seite einen Spitzenabschnitt (303), der dazu ausgelegt ist, mit einem freien Ende (10b) des endodontischen Stützstifts (100) gekoppelt zu werden, umfasst und wobei der Spitzenabschnitt (303) eine zur Form des freien Endes (10b) komplementäre Form des endodontischen Stützstiftes zur Realisierung einer im wesentlichen abgedichteten Formschlussverbindung aufweist, und dass
der längliche Körper (10) mit einer oder mehreren Öffnungen (25, 25') versehen ist, die das Durchgangsloch (15) schneiden.

2. Dentalkit nach Anspruch 1, wobei die Bohrachse (15') mit der Längsachse (10') des länglichen Körpers (10) zusammenfällt.

3. Dentalkit nach Anspruch 1 oder 2, wobei der längliche Körper (10) eine zylindrische oder kegelstumpfförmige Form aufweist.

4. Dentalkit nach Anspruch 3, wobei der längliche Körper eine äußere Seitenwand (12) aufweist, die gegenüber der Längsachse (10') um 2°- 15° geneigt ist.

5. Dentalkit nach einem der Ansprüche 1-4, wobei der längliche Körper (10) an einem Ende (10a) mindestens eine das geöffnete Durchgangsloch (15) schneidende Aussparung (18) aufweist.

6. Dentalkit nach Anspruch 1, wobei die Öffnungen (25, 25') in dem länglichen Körper (10) auf gegenüberliegenden Seiten bezüglich einer die Längsachse (10') enthaltenden Symmetrieebene erhalten werden.

7. Dentalkit nach Anspruch 1 oder 6, wobei die Öffnungen Schlitze (25) und/oder Löcher (25') sind, die quer oder in Längsrichtung zueinander ausgerichtet auf dem länglichen Körper angeordnet sind.

8. Dentalkit nach einem der vorhergehenden Ansprüche, wobei der längliche Körper (10) aus einem Kohlenstofffaser- und/oder Glasfaserhaltigen Verbundwerkstoff hergestellt ist.

9. Dentalkit nach einem der vorhergehenden Ansprüche, wobei der Spitzenabschnitt (303) dazu eingerichtet ist, auf das freie Ende (10b) des endodontischen Stützstifts (100) aufgesteckt oder in dieses eingesetzt zu werden.

## Revendications

1. Kit dentaire comprenant: une broche de support endodontique (100) destinée à servir de support pour une reconstruction prothétique d'une dent, et un connecteur (300) comprenant un corps creux qui définit un conduit de passage (301) pour un matériau de fixation, dans lequel ladite broche de support endodontique et ledit connecteur sont aptes à être couplés de manière amovible entre eux et dans lequel ladite broche de support endodontique comprend
un corps allongé (10) ayant un axe longitudinal (10') et une largeur externe/diamètre externe (dₑₓₜ);
un trou traversant (15) obtenu dans le corps allongé (10), ledit trou traversant (15) ayant un axe de forage (15') sensiblement parallèle audit axe longitudinal (10') et une largeur interne/diamètre interne (dᵢₙₜ),
**caractérisé en ce que** le rapport entre la largeur interne/diamètre interne (dᵢₙₜ) dudit trou traversant (15) et la largeur externe/diamètre externe (dₑₓₜ) dudit corps allongé (10), déterminé par rapport à un plan de mesure commun (30) perpendiculaire à la fois à l'axe longitudinal (10') et à l'axe de forage (15'), est inclus entre 0,5 et 0,65 de telle sorte que ladite broche de support endodontique (100) est apte à servir de canule pour injecter le matériau de fixation dans le canal radiculaire (210) de la dent (200) et que le trou traversant (15) est apte à être rempli d'un matériau de fixation qui, une fois durci, constitue le noyau de la broche de support, et **en ce que**
ledit connecteur (300) comprend, d'un côté, une partie de connexion (302) destinée à être associée à un dispositif externe pour injecter un matériau de fixation et, de l'autre côté, un partie de bout (303) apte à être couplée à une extrémité libre (10b) de ladite broche de support endodontique (100), et dans lequel ladite partie de bout (303) a une forme complémentaire par rapport à la forme de ladite extrémité libre (10b) de la broche de support endodontique pour réaliser un couplage de forme sensiblement scellé, et **en ce que**
ledit corps allongé (10) est muni d'une ou plusieurs ouvertures (25, 25') interceptant ledit trou traversant (15).

2. Kit dentaire selon la revendication 1, dans lequel l'axe de forage (15') est coïncident avec ledit axe longitudinal (10') du corps allongé (10).

3. Kit dentaire selon la revendication 1 ou 2, dans lequel ledit corps allongé (10) a une forme cylindrique ou tronconique.

4. Kit dentaire selon la revendication 3, dans lequel ledit corps allongé comprend une paroi latérale extérieure (12) qui est inclinée de 2° - 15° par rapport audit axe longitudinal (10').

5. Kit dentaire selon l'une quelconque des revendications 1-4, dans lequel ledit corps allongé (10) est muni, à l'une des ses extrémités (10a), d'au moins une encoche (18) interceptant ledit trou traversant (15) ouvert.

6. Kit dentaire selon la revendication 1, dans lequel lesdites ouvertures (25, 25') sont placée dans ledit corps allongé (10) sur des côtés opposés par rapport à un plan de symétrie contenant ledit axe longitudinal (10').

7. Kit dentaire selon la revendication 1 ou 6, dans lequel lesdites ouvertures sont des rainures (25) et/ou trous (25') qui sont alignés transversalement ou longitudinalement les uns par rapport aux autres sur ledit corps allongé.

8. Kit dentaire selon l'une quelconque des revendications précédentes, dans lequel le corps allongé (10) est réalisé dans un matériau composite comprenant de la fibre de carbone et/ou de la fibre de verre.

9. Kit dentaire selon l'une quelconque des revendications précédentes, dans lequel ladite partie de bout (303) est apte à être montée sur, ou insérée dans, ladite extrémité libre (10b) de ladite broche de support endodontique (100).
